# EUROPÄISCHE PATENTSCHRIFT

(11) **EP 3 822 507 B1**
(45) Veröffentlichungstag und Bekanntmachung des Hinweises auf die Patenterteilung: **01.02.2023**
(21) Anmeldenummer: 19209806.9
(22) Anmeldetag: 18.11.2019
(51) Int. Cl.: F16D 65/56

(54) **BETÄTIGUNGSEINHEIT FÜR EINE ELEKTRISCHE PARKBREMSE**
ACTUATING UNIT FOR AN ELECTRIC PARKING BRAKE
UNITÉ D'ACTIONNEMENT POUR UN FREIN DE STATIONNEMENT ÉLECTRIQUE

(43) Veröffentlichungstag der Anmeldung: 19.05.2021
(73) Patentinhaber: SFS Group International AG, 9435 Heerbrugg (CH)
(72) Erfinder: Peric, Edi, 9442 Berneck (CH); Frei, Stefan, 9443 Widnau (CH); Sutter, Christian, 9050 Appenzell (CH)

(56) Entgegenhaltungen:
- WO-A1-98/36186
- DE-A1- 1 655 485
- DE-A1- 1 811 370
- DE-A1- 2 855 712
- DE-A1- 3 505 774
- DE-B3-102011 050 814
- DE-U1- 29 622 242
- FR-A2- 2 105 202

## Beschreibung

Die vorliegende Erfindung betrifft eine Betätigungseinheit in Mutter-Spindelausführung für eine Feststellbremse von Kraftfahrzeugen.

### STAND DER TECHNIK

Eine Feststellbremse für Kraftfahrzeuge nach Stand derTechnik wird häufig über Seilzüge bedient, die über hand-oderfussbetätigte Hebel durch Rastvorrichtungen in einer Endposition festgehalten werden können. Üblicherweise wird in dieser Endposition das Bremselement der hydraulisch oder pneumatisch betätigten Betriebsbremse mechanisch verriegelt.

Die Offenlegungsschrift DE 1 655 485 beschreibt eine selbsttätige Nachstelleinrichtung für eine Kombination aus hydraulischer Betriebsbremse und mechanisch betätigter Handbremse. Eine federbeaufschlagte Steilgewindespindel (6) ist in einer Steilgewinde-Bohrung (8) in dem Betätigungskolben (2) einer Betriebsbremse eingeschraubt. Das freie Ende der Spindel ist zu einer Kegelhülse (7) erweitert, die mit einem Aussenkegel (5) kraftschlüssig wechselwirken kann. Dieser Aussenkegel (5) wiederum ist wirkverbunden mit einer Führungshülse (15). Wird die Führungshülse (15) mechanisch betätigt (Handbremsvorgang) und damit der Aussenkegel (5) gegen die Kegelhülse gedrückt, wird über die Steilgewindespindel (6) diese Bewegung in eine mechanische Bremsbewegung übersetzt. Das gezeigte Gewinde der Nachstelleinrichtung ist als Rechteckgewinde ausgeführt.

In den letzten Jahren wurden diese rein mechanischen Parkbremsen zunehmend durch elektrische Bremssysteme abgelöst. Diese verwenden eine Gewindespindel/Mutter Kombination als axial verstellbares Element eines Linearantriebes. Eine Gewindespindel wird durch einen Elektromotor angetrieben und wirkt auf das Gewinde der umgreifenden Mutter. Durch die Spindeldrehung wird die Mutter in eine Längsbewegung entlang der Spindelachse versetzt. Wird die Mutter mit einem Kolbenelement verbunden, das auf einen Bremsbelag wirkt, lässt sich eine (Feststell-)Bremswirkung erzielen. Ein Mutter-Spindelsystem hat darüber hinaus den Vorteil, dass es stromlos sicher ist, weil die Selbsthemmung des Gewindes, verbunden mit einem üblicherweise vorhandenen Untersetzungsgetriebe und dem Antriebsmotor die Bremse in der arretierten Stellung hält.

Das Mutter-Spindelsystem wirkt technisch gesehen als Schraubgetriebe, wobei die Unter- bzw. Übersetzung durch die Dimensionierung der Gewindespindel und die Steigung des Gewindes bestimmt wird. Für Parkbremssysteme sind sehr kurze Reaktionszeiten normalerweise nicht erforderlich; hingegen müssen ausreichend grosse Klemmkräfte auf die Bremse erzeugt werden können, damit auch beim Parken in Hanglagen im beladenen Zustand ein Fahrzeug sicher gehalten werden kann. Aus diesem Grund finden vorwiegend Mutter-Spindelsysteme Anwendung und weniger häufig die komplexeren und aufwändigeren, aber leichtgängigeren Kugelgewindetriebe.

Im Folgenden soll die Gewindeauslegung betrachtet werden, die typischerweise bei der Konstruktion eines Mutter-Spindelsystems angewendet wird. Die Stellkräfte beim Betätigen einer Parkbremse wirken auf das Mutter-Spindelsystem im Wesentlichen entlang der Mittenlängsachse des Systems. Der Kräfteübergang zwischen Gewindespindel und Mutter erfolgt dabei über die ineinander greifenden Gewindegänge; je nach Belastungsrichtung über die jeweils aufeinander gleitenden Flanken der Gewindegänge von Mutter und Gewindespindel. Da die Baulänge der montierten Betätigungseinheit aus Antriebsspindel und Mutter je nach Stellung des Gewindes variiert, ändert sich auch die Gesamtfläche der kraftübertragenden Flanken. Ferner kann, je nach Auszugslänge der Mutter-Spindel-Kombination auch das Winkelspiel, also die mögliche seitliche Auslenkung bzw. Verkippung der Gewindespindel relativ zur Mutter, unterschiedlich gross sein.

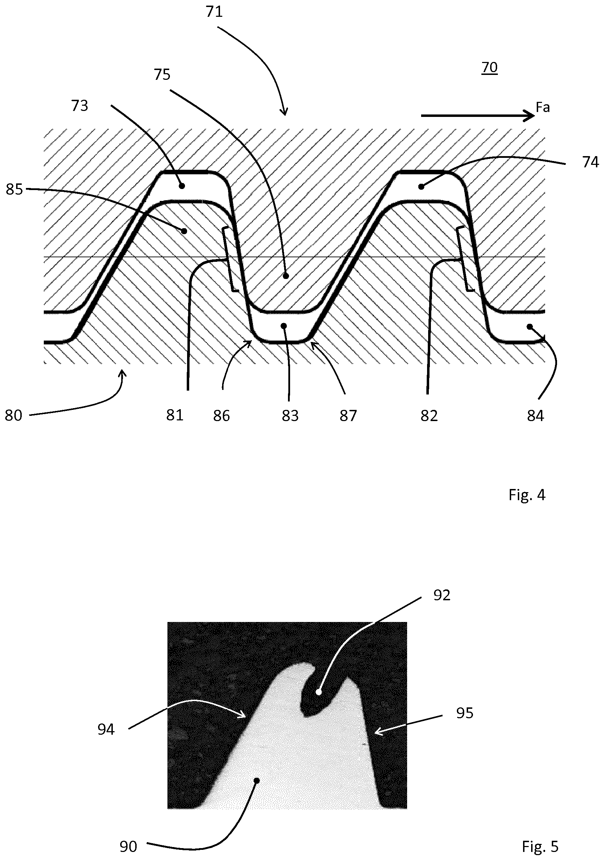

Zum Verständnis sei auf Figur 4 verwiesen, wo ein asymmetrisches Gewinde gezeigt ist, bei dem der Gewindegang über Flanken unterschiedlicher Steilheit verfügt. Gezeigt ist eine Situation, wo die auf die Mutter wirkende Kraft Fₐ (Kraft parallel zur Achse der Mutter-Spindel-Einheit) die steileren Gewindeflanken von Mutter und Gewindespindel aufeinanderpresst.

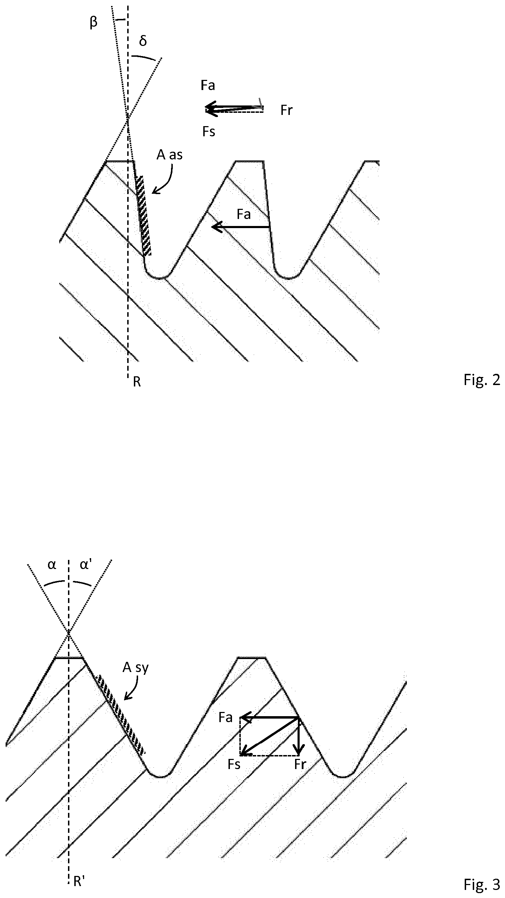

Figur 2 und 3 betrachten diese Situation nun an einer isolierten Gewindeflanke: Fₐ wirkt axial, was eine Aufteilung der Kräfte erlaubt wie im Kräfte-Parallelogramm gezeigt. Es ergibt sich eine Kraftkomponente Fₛ, welche senkrecht zur Flanke ins Gewinde eingeleitet wird und eine Radialkomponente Fᵣ. Mit Aₐₛ und A_{sy} sind die Flankenflächen bezeichnet, die effektiv kraftschlüssig mit der Gegenflanke in Eingriff stehen. Aus Vergleich von Figur 2 und 3 wird deutlich, dass die axial auf Aₐₛ bzw. A_{sy} wirkende Kraft Fₐ bei einem Gewinde mit steilen Flanken besser ins Material abgeleitet werden kann, als mit flacheren Flanken. Das hat zwei offensichtliche Vorteile: Zum einen ist die Druckbelastung auf die Oberfläche geringer, weil die senkrechte Kraftkomponente Fₛ bei flacheren Flanken kleiner ausfällt (bei gleichem Fₐ). Zum zweiten fällt auch die radiale Kraftkomponente Fᵣ geringer aus. Zwar wird es spiegelsymmetrisch zur Mittenachse des System eine Komponente - Fᵣ geben, die diese Komponente (weitgehend) aufhebt. Wegen Fertigungstoleranzen kann über die im Eingriff stehende Gewindelänge betrachtet sich jedoch eine resultierende Kraft ergeben, welche zu einem Kippmoment auf das Mutter-Spindelsystem führt und damit den Verschleiss verstärkt.

Da bei Parkbremssystemen die höchste Belastung für die Betätigungseinheit auftritt, wenn das System in Bremsstellung gebracht wird, ist es daher naheliegend, ein asymmetrisches Gewinde zu wählen, weil so die Belastungsspitzen von der Mutter auf die Spindel besser abgeleitet werden können.

### DARSTELLUNG DER ERFINDUNG

Mutter-Spindel-Systeme für den beschriebenen Einsatz als Teil eines Linearantriebes werden aus Kostengründen häufig als kaltumgeformte Werkstücke aus Stahl gefertigt. Die Gewinde werden hierbei mit speziellen Maschinen gerollt, also kaltwalzumgeformt. Dabei wird der Gewindezug durch geeignete Kerbrollen in eine zylindrische oder hohlzylindrische Rohform eingefurcht. Dies kann so als Innengewinde erfolgen (Mutter) oder als Aussengewinde (Spindel). Die Kaltumformung sorgt für eine höhere Gewindefestigkeit und kann glattere und bessere Oberflächenstrukturen ohne Spanbildung ermöglichen.

Ein Nebeneffekt beim Gewinderollen ist die Bildung der sogenannten Schliessfalte. Bei der Gewindeherstellung drückt das Werkzeug das Gewindeprofil in den Rohling ein und verdrängt den Werkstoff vom Gewindegrund in die Gewindespitzen. Dies geschieht somit für jeden Gewindezug gleichzeitig von beiden Flanken her. Die Grenzfläche zwischen diesen beiden Verdrängungsfronten kann an der Gewindespitze je nach Umformgrad, Material und Prozessführung zu einer mehr oder weniger ausgeprägten Schliessfalte entlang der Gewindespitze führen; dort, wo die Materialverdrängung maximal ist, der Gewindezug jedoch am schmalsten. Schliessfalten sind nachteilig für die Belastungsfähigkeit der Region der Gewindespitze.

Bei einem asymmetrischen Gewinde entsteht auch eine asymmetrisch angeordnete Schliessfalte. Untersuchungen haben nun ergeben, dass diese Schliessfalte nicht beide Gewindeflanken gleichmässig schwächt; interessanterweise ist die steilere Gewindeflanke stärker betroffen. Dies kann sich negativ auswirken wegen der oben gezeigten Kraftverteilung. Wie der Vergleich von Figur 2 und 3 zeigt, ist die ins Material eingeleitete Kraftkomponente Fₛ (vektoriell) bei flacheren Flanken zwangsläufig stärker zur Mittelachse geneigt als bei der steileren Flanke. Damit zielt, bildlich gesprochen, bei der flacheren Gewindeflanke der Kraftvektor eher an der Schliessfalte vorbei, in das für die Krafteinleitung vorteilhafte, von der Schliessfalte ungestörte Volumen des Gewindezahns.

Ebenfalls als Resultat des Gewindeformens wird das Material bei asymmetrischen Gewinden im Gewindegrund, bezogen auf die Ursprungsoberfläche, am Fuss einer steileren Flanke stärker gekerbt als bei einer flacheren Flanke. Damit wird das Material im Gewindegrund lokal stärkeren Belastungen unterworfen, was die Bildung von Mikrorissen begünstigen kann.

All diese Überlegungen lassen den Ansatz aus dem Stand der Technik, die Mutter-Spindel-Systeme der Betätigungseinheit für Parkbremssysteme mit einem asymmetrischen Gewinde auszulegen, als nicht grundsätzlich vorteilhaft erscheinen. Betätigungseinheiten gemäss vorliegender Erfindung zeichnen sich durch vereinfachte Herstellung und verbesserten Wirkungsgrad aus, während die Verriegelungskräfte in Endposition denselben Vorgaben entsprechen.

Eine erfindugsgemäße Feststellbremse von Kraftfahrzeugen umfasst eine wirkverbundene Einheit aus Antriebsspindel und Mutter, die ein axial längenverstellbares Element eines Linearantriebes bildet und als solches wirkt. Die Antriebsspindel weist eine Antriebsseite zur Verbindung mit einem elektrischen Antrieb auf und einen im Wesentlichen zylindrischen Spindelabschnitt mit einem Aussengewinde. Die Mutter hingegen weist einen hülsenförmigen Zentralkörper auf mit einem Innengewinde und ferner einen Kopfabschnitt, der ausgebildet ist, um als Druckkolben auf ein Bremselement der Feststellbremse einzuwirken. Zentralkörper und Kopfabschnitt der Mutter können ebenso wie Antriebsseite und Spindelabschnitt der Antriebsspindel einstückig ausgeführt sein bzw. kraft- oder form- oder stoffschlüssig zusammengesetzt sein aus zwei Bauteilen. Innen- und Aussengewinde der Betätigungseinheit kämmen im Wirkverbund als Gewinde ineinander und definieren eine gemeinsame axiale Rotationsachse (A).

Gemäss der Erfindung wird das Gewinde als symmetrisches Gewinde ausgelegt, bei dem die Flankenwinkel (α, α') bezogen auf eine radiale Bezugsebene (R) senkrecht zur Rotationsachse (A) im Wesentlichen gleich grosse Winkelbeträge aufweisen.

In einer bevorzugten Ausführungsform der Betätigungseinheit wird die Antriebsspindel massgeblich als kaltumgeformtes Metallformteil ausgeführt ist. In einer weiteren Ausführungsform wird die die Mutter massgeblich als kaltumgeformtes Metallformteil ausgeführt. Mit massgeblich ist in beiden Fällen gemeint, dass bis auf Vorbehandlungs- bzw. Nachbehandlungsschritte (wie etwa Herstellung der Rohform vor dem Gewinderollen, Wärmebehandlung, Oberflächenvergütung, Härtung, Reinigung, Überdrehen bzw. Feinschliff) die wesentlichen Umformschritte durch Kaltumformung und nicht durch spanende Bearbeitung erfolgen.

In einer weiteren Ausführungsform einer Betätigungseinheit werden die Flankenwinkel (α, α') zwischen 12-18° (jeweils inclusive) gewählt, bevorzugt zwischen 13° und 15°.

Die Verwendung einer Betätigungseinheit als axial längenverstellbares Element eines Linearantriebes für eine Feststellbremse von Kraftfahrzeugen baut auf eine wirkverbundene Einheit aus Antriebsspindel und Mutter. Die Antriebsspindel weist eine Antriebsseite zur Verbindung mit einem elektrischen Antrieb auf und einen im Wesentlichen zylindrischen Spindelabschnitt mit einem Aussengewinde. Die Mutter hingegen weist einen hülsenförmigen Zentralkörper auf mit einem Innengewinde und ferner einen Kopfabschnitt, der ausgebildet ist, um als Druckkolben auf ein Bremselement der Feststellbremse einzuwirken. Zentralkörper und Kopfabschnitt der Mutter können ebenso wie Antriebsseite und Spindelabschnitt der Antriebsspindel einstückig ausgeführt sein bzw. kraft- oder form- oder stoffschlüssig zusammengesetzt sein aus zwei Bauteilen. Innen- und Aussengewinde der Betätigungseinheit kämmen im Wirkverbund als Gewinde ineinander und definieren eine gemeinsame axiale Rotationsachse (A). Das Gewinde ist als symmetrisches Gewinde ausgelegt, bei dem die Flankenwinkel (α, α') bezogen auf eine radiale Bezugsebene (R) senkrecht zur Rotationsachse (A) im Wesentlichen gleich grosse Winkelbeträge aufweisen.

### BESCHREIBUNG DER FIGUREN

Figur 1 zeigt eine Betätigungseinheit aus Mutter und Spindel im Längsschnitt.
Figur 2 und Figur 3 zeigen eine Gewindepartie im Schnitt quer zum Gewindezug. Figur 2 repräsentiert schematisch ein asymmetrisches Gewinde, Figur 3 ein symmetrisches.
Figur 4 zeigt einen Ausschnitt aus einem asymmetrischen Gewindemit einem Gewinde im Eingriff
Figur 5 zeigt ein Schemabild eines Gewindezahns mit Schliessfalte im Querschnitt

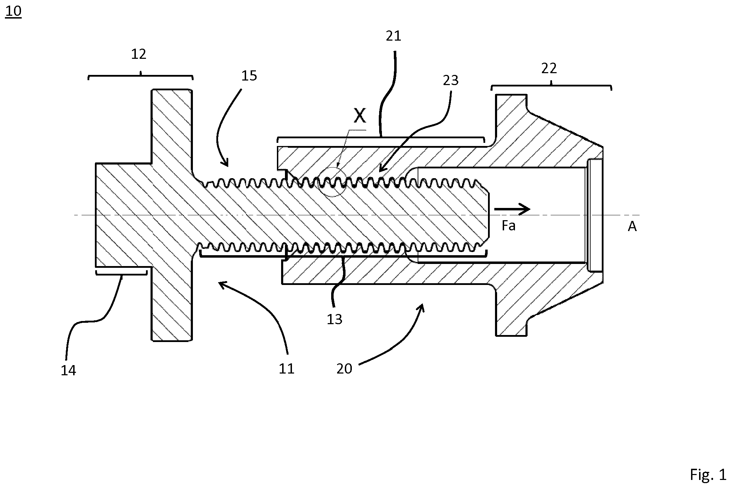

Figur 1 zeigt eine Betätigungseinheit 10 als System aus Mutter 20 und Antriebsspindel 11 im wirkverbundenen Eingriff. So eine Baugruppe kann als Linearantriebselement in einem elektrischen Parksystem Verwendung finden, ist per se aber auch für technisch äquivalente Aufgaben geeignet wie Schliess- oder Verriegelungssysteme, bei denen in Endposition eine konstante, axiale Kraft auf der Baugruppe lastet.

Die Antriebsspindel 11 lässt sich im Wesentlichen in zwei Unterabschnitte gliedern. Zum einen die Antriebsseite 12, die eine Lagerung 14 einschliessen kann. Hier erfolgt die Kraftübertragung von einem Antriebsmotor. Diese Übertragung kann, wie im Stand der Technik bekannt, von einem Antriebsmotor via ein Kupplungselement direkt erfolgen oder indirekt über ein Getriebe, Zahnriemen oder ein anderes geeignetes Mittel. Der andere Unterabschnitt ist der eigentliche Spindelgewindeabschnitt 13. Er ist technisch als im Wesentliches stabförmiges Bauelement ausgeführt mit einem Aussengewinde 15. Diese Antriebsspindel 11 ist im Wirkverbund gezeigt mit einer Mutter 20. Letztere lässt sich untergliedern in einen Kopfabschnitt 22 und einen hülsenförmigen Zentralkörper 21, der ein Innengewinde 23 trägt. Im verbauten Zustand ist üblicherweise die Antriebsspindel 11 ortsfest, aber drehbar angetrieben in einem Bremssystem montiert. Die Mutter 20 ist axial verschieblich relativ zur Antriebsspindel 11 montiert. Der Kopfabschnitt 22 kann als Teil eines Druckkolbens ausgebildet werden, der auf ein Bremselement wie e.g. ein Bremsbacken wirkt. Mutter 20 und Antriebsspindel 11 besitzen im wirkverbundenen Zustand eine gemeinsame Zentralachse A, die für das Gewinde eine zentrale Längsachse bildet.

Der markierte Abschnitt X entspricht (exemplarisch) der Figur 4. Das gezeigte Gewinde ist lediglich schematisch.

Figur 2 und 3 zeigen einen Teilschnitt durch eine Spindel bzw. Mutter entlang der Mittelachse mit mehreren Gewindezügen. Figur 2 zeigt ein asymmetrisches Gewinde mit unterschiedlich steilen Gewindeflanken, Figur 3 ein symmetrisches Gewinde. In Figur 2 verläuft eine Radialebene R durch den Schnittpunkt der Verlängerung der Gewindeflanken einerseits und steht andererseits auf der zentralen Längsachse A (hier nicht gezeigt) senkrecht. Die beiden Winkel β und δ sind unterschiedlich gross gewählt, im gezeigten Beispiel gilt β < δ.

Mit Aₐₛ ist schematisch diejenige Fläche angedeutet, die im Betrieb als Kontaktfläche zur Gegenflanke dient. Man erkennt, dass die eingezeichnete Kraft Fₐ unter einem Winkel 90°-β auf die Kontaktfläche trifft. Je steiler die Flanke ausgeführt wird, desto kleiner ist β und desto geringer demnach ist die Kraftkomponente Fr, die in radialer Richtung wirkt. Wie steil bei gegebenem Winkel β die zweite Flanke gewählt werden kann hängt unter anderem von der Steigung des Gewindes ab.

In Figur 3 sind - analog Figur 2 - die Verhältnisse an einem idealisierten symmetrischen Gewinde mit im Wesentlichen gleichen Flankenwinkeln α, α' gezeigt. Anhand des Kräfte-Parallelogrammes ist erkennbar, warum ein symmetrischer Gewindeaufbau für die beschriebene Verwendung früher nicht favorisiert wurde - der Flächendruck, berechnet mit Fₛ ist bei gleichem Fₐ in Figur 3 höher als in Figur 2. A_{sy} bezeichnet schematisch die Kontaktfläche mit der Gegenflanke im Wirkverbund.

Figur 4 entspricht in etwa dem Ausschnitt X in Figur 1, gezeigt wird jedoch ein Detail 70 mit einem asymmetrischen Gewinde. Der Gewindeanteil 71 ist exemplarisch der Mutter zuzuordnen, der (untere) Gewindeanteil 80 der Antriebsspindel. Die in Figur 4 gezeigten Freiräume 73, 74, 83, 84 entstehen, weil Gewindegrund und Gewindespitze eines Getriebes ein begrenztes Spiel von Mutter und Spindel erlauben und wirken im Betrieb auch als Schmierstoffdepots. Ein Gewindezahn 75 der Mutter berührt einen Gewindezahn 85 der Antriebsspindel in einem begrenzten Gebiet, die als Flankenfläche 81 bzw. 82 markiert ist und Aₐₛ in Figur 2 entspricht. Im Bereich des Freiraums 83, im Gewindegrund, ist erkennbar, dass die Kerbwirkung beim Übergang 86 der steileren Flanke in den Gewindegrund grösser ist als beim Übergang 87. Der Pfeil Fₐ deutet die axiale Krafteinwirkung an, die die Gewindeflanken wie gezeigt aufeinanderpresst.

Figur 5 zeigt in einem schematischen Schnitt eine Gewindespitze 90 mit zwei unterschiedlich steilen Flanken 94 und 95 eines asymmetrischen Gewindes mit einer Schliessfalte 92.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

## Patentansprüche

1. Feststellbremse von Kraftfahrzeugen mit einer Betätigungseinheit (10), umfassend eine wirkverbundene Einheit aus Antriebsspindel (11) und Mutter (20), die als axial längenverstellbares Element eines Linearantriebes wirkt,
- wobei die Antriebsspindel (11) eine Antriebsseite (12) zur Verbindung mit einem elektrischen Antrieb aufweist und einen im wesentlichen zylindrischen Spindelabschnitt (13) mit einem Aussengewinde (15) ;
- wobei die Mutter (20) einen hülsenförmigen Zentralkörper (21) aufweist mit einem Innengewinde (23) und ferner einen Kopfabschnitt (22) der so ausgebildet ist, um als Druckkolben auf ein Bremselement der Feststellbremse einzuwirken;
- wobei Innen- und Aussengewinde im Wirkverbund als Gewinde ineinander kämmen und eine gemeinsame axiale Rotationsachse (A) aufweisen;
**dadurch gekennzeichnet, dass**
das Gewinde ein symmetrisches Gewinde ist, bei dem die Flankenwinkel (α, α') bezogen auf eine radiale Bezugsebene (R) senkrecht zur Rotationsachse (A) im Wesentlichen gleich grosse Winkelbeträge aufweisen.

2. Feststellbremse nach Anspruch 1, **dadurch gekennzeichnet, dass** die Antriebsspindel (11) massgeblich als kaltumgeformtes Metallformteil ausgeführt ist.

3. Feststellbremse nach Anspruch 1-2, **dadurch gekennzeichnet, dass** die Mutter (20) massgeblich als kaltumgeformtes Metallformteil ausgeführt ist.

4. Feststellbremse nach einem der vorhergehenden Ansprüche, **dadurch gekennzeichnet, dass** die Flankenwinkel (α, α') zwischen 12°-18° (jeweils inclusive) gewählt werden.

## Claims

1. Parking brake of motor vehicles with an actuating unit (10), comprising an operatively connected unit consisting of a drive spindle (11) and a nut (20), which acts as an axially length-adjustable element of a linear drive,
- wherein the drive spindle (11) has a drive side (12) for connecting to an electric drive and a substantially cylindrical spindle section (13) with an external thread (15);
- wherein the nut (20) comprises a sleeve-shaped central body (21) having an internal thread (23) and further a head section (22) adapted to act as a pressure piston on a brake element of the parking brake;
- wherein the internal and external threads mesh with each other as a threaded connection and have a common axial axis of rotation (A);
**characterized in that**
the thread is a symmetrical thread in which the flank angles (α, α') have substantially equally large angular amounts relative to a radial reference plane (R) perpendicular to the axis of rotation (A).

2. Parking brake according to claim 1, **characterized in that** the drive spindle (11) is essentially designed as a cold-formed metal part.

3. Parking brake according to claim 1-2, **characterized in that** the nut (20) is essentially designed as a cold-formed metal part.

4. Parking brake according to one of the preceding claims, **characterized in that** the flank angles (α, α') are selected between 12°-18° (inclusive in each case).

## Revendications

1. Frein d'immobilisation de véhicules à moteur avec une unité d'actionnement (10), comprenant une unité en liaison active composée d'une broche d'entraînement (11) et d'un écrou (20) qui agit comme l'élément déplaçable longitudinalement d'un entraînement linéaire,
- dans lequel la broche d'entraînement (11) présente un côté menant (12) destiné à la liaison avec un entraînement électrique et un segment de broche (13) sensiblement cylindrique muni d'un filetage extérieur (15) ;
- dans lequel l'écrou (20) présente un corps central (21) en forme de douille avec un filetage intérieur (23) ainsi qu'un segment de tête (22) conformé de façon à agir comme un piston de poussée sur un élément de frein du frein d'immobilisation ;
- dans lequel les filetages intérieur et extérieur engrènent l'un dans l'autre comme un filetage dans une liaison active et présentent un axe de rotation axial commun (A),
**caractérisé en ce que** le filetage est un filetage symétrique dans lequel les angles formés par les flancs (α, α') par rapport à un plan de référence radial (R) perpendiculaire à l'axe de rotation (A) ont une valeur angulaire sensiblement égale.

2. Frein d'immobilisation selon la revendication 1, **caractérisé en ce que** la broche d'entraînement (11) est réalisée dans une mesure déterminante comme une pièce en métal mise en forme à froid.

3. Frein d'immobilisation selon la revendication 1-2, **caractérisé en ce que** l'écrou (20) est réalisé dans une mesure déterminante comme une pièce en métal mise en forme à froid.

4. Frein d'immobilisation selon l'une des revendications précédentes, **caractérisé en ce que** les angles formés par les flancs (α, α') sont choisis entre 12° (inclus) et 18° (inclus).
